# EUROPEAN PATENT APPLICATION

(11) **EP 1 437 162 A2**
(43) Date of publication of application: **14.07.2004**
(21) Application number: 04008929.4
(22) Date of filing: 12.06.2001
(51) Int. Cl.: A63G 31/16

(54) **Ride apparatus**

(30) Priority: 16.06.2000 GB 0015005; 20.10.2000 GB 0025761
(62) Divisional of application: 01938384.3
(71) Applicant: Robocoaster Limited, Warwick Gates, Warwick CV34 6FE (GB); KUKA Roboter GmbH, 86165 Augsburg (DE)
(72) Inventor: The designation of the inventor has not yet been filed
(74) Representative: Lempert, Jost, Dipl.-Phys. Dr. rer.nat.

(57) **Abstract**

The invention relates to an amusement ride comprising an output member having an anthropomorphic robot arm adapted for six degrees of movement and a passenger station in moveable engagement with said output member. The ride according to the invention is characterized by computer controlled safety means.

## Description

This invention relates to ride apparatus and particularly (but not exclusively) to ride apparatus used in amusement parks and the like.

A variety of amusement rides is known for use in amusement parks. Such rides typically comprise dodgem, log flume, roller coaster and vertical drop rides (see for instance documents EP-A-0997175 and EP-A-0997176, which disclose all the features set out in the preamble of claim 1). However, these rides are commonplace and there is an increasing demand for new, novel rides to maintain interest in said parks.

Accordingly, the present invention provides an amusement ride comprising an output member having an anthropomorphic robot arm adapted for six degrees of movement, said ride further comprising a passenger station in moveable engagement with said output member, and computer-controlled safety means.

Preferably the safety means comprise actuators. The actuators may be electro-mechanically, hydraulically or pneumatically operated, or by a combination of electromechanical, hydraulic and pneumatic operation.

The safety means preferably limits a G-force generated by the amusement ride.

The amusement ride is preferably supported on the ground. Alternatively, the amusement ride may be supported from a wall or from a ceiling.

More preferably, the ride may be mounted on a carousel. Alternatively, the ride may be mounted on a column. The column may be provided with means to cause vertical movement of the ride along a path parallel to the axis of the column. Alternatively, the ride may be mounted on a column which is in turn mounted on a carousel.

The passenger station preferably comprises one or more seats.

The passenger station preferably has means for audio-visual interaction. The audio-visual interaction may be respectively provided by speakers and a display means.

The visual and audio interaction may, separately or together, be synchronised with movements of the ride.

The audio and visual interaction data is stored on a data carrier. The data carrier may be a Mini Disc (MD), a CD-ROM, a magneto-optical device, a video tape, a hard drive, a Digital Versatile Disc (DVD) or other equivalent data carrier. The audio and visual interaction data may be stored on a combination of any two or more of the aforementioned data carriers.

Lighting effects may be used throughout the audio-visual interaction. The lighting effects may be synchronised with the ride. The lighting effects may comprise, for example, strobe, laser or disco light shows or any combination thereof.

The display means may be a plasma screen, a liquid crystal display, an active matrix Organic Light Emitting Diode (OLED) display, or a Light Emitting Polymer (LEP) display.

The visual interaction may alternatively be provided by a projector and screen.

The seats preferably comprise retaining means to retain a passenger when the ride is operable.

The retaining means may comprise a belt, for example, a safety belt or a pull down rigid harness or similar harness. Alternatively, the retaining means may comprise a cage.

The retaining means is preferably in operative engagement with a linear actuator.

The amusement ride may further comprise a weight sensor, said weight sensor providing a means to counter out of balance loads. Alternatively, the weight sensor provides a means to counter a maximum weight overload.

The amusement ride may further comprise a controller. The controller is preferably located in the passenger station. Alternatively , the controller is located at a passenger entrance to the ride.

The controller may be used to select a pre-programmed ride. Alternatively, the controller may be used to control the amusement ride independently of the pre-programmed ride.

The controller is preferably a joystick. Alternatively, the controller may be a steering wheel or a joypad.

The controller may further comprise one or more foot pedals.

The controller may comprise a combination of the aforementioned joystick and/or steering wheel and/or joypad and/or foot pedals.

A ticket reader can be provided which can read a ticket, said ticket preferably being compatible with said ride. The ticket may be a card made of a plastics material. The ticket preferably has a code defining a pre-programmed ride. The code is preferably a bar code. Alternatively, the code may be contained in a microchip incorporated in the ticket.

A platform can be provided which preferably comprises one or more steps, with a raised platform in operative engagement with said steps. The platform, in use, may suitably be adapted for pivotal movement about a substantially horizontal axis.

The platform is preferably raised and lowered about its axis by means of an actuator. The actuator may be hydraulically or pneumatically operated. The platform may be raised or lowered about its axis by a combination of hydraulic or pneumatic actuators.

Alternatively, the platform may be fixed and the amusement ride may be adapted to be lowered to a position which allows the ingress and egress of passengers respectively on to or off from the amusement ride.

In a further alternative the platform may be retracted into a stowage compartment and, in use, said platform is extended from the stowage compartment to engage with the ride in a lowered position.

The platform may be retracted and extended by means of one or more actuators. The actuators may be hydraulically or pneumatically operated, or a combination of hydraulic and pneumatic operation.

The platform preferably further comprises a safety barrier. The safety barrier, in use, may suitably be adapted for pivotal movement about a substantially vertical axis. Alternatively, the platform and safety barrier may each be adapted for pivotal movement about a substantially 45° axis (relative to the ground).

The safety barrier is preferably operated about its axis by means of an actuator. The actuator may be hydraulically or pneumatically operated.

The amusement ride may comprise more than one of said rides. Where two or more ride are employed they may be programmed to move synchronously. Alternatively, it may be programmed to move asynchronously.

Two or more rides may be used in a combat game.

The ride may be water-proofed for use in a "splash park".

The ride may comprise water cannons for use in a combat-type game in a splash park.

Preferred embodiments of the present invention will now be described, merely by way of example, with reference to the accompanying drawings.
**Figure 1** shows an amusement ride output member in accordance with the present invention.
**Figure 2A to 2F** show the amusement ride of Figure 1 in operative condition during a ride.
**Figure 3A and 3B** show the amusement ride of Figure 1 in alternative mounted conditions.
**Figure 4** shows two amusement rides of Figure 1 in a combat game.
**Figures 5A to 5C** show a passenger station in accordance with the present invention.
**Figures 6A to 6C** show a first procedure for vacating the amusement ride.
**Figures 7A to 7C** show a second procedure for vacating the amusement ride.
**Figures 8A to 8C** show a third procedure for vacating the amusement ride.
**Figures 9A to 9C** show the use of linear actuators or safety interlocks in the operation of a retaining means.
**Figure 10** shows the ride operatively connected with other rides for synchronous movement.
**Figures 11A to 11D** show combinations of rides operatively connected in alternative arrangements.
**Figures 12A and 12B** show the ride adapted to be incorporated into a fairground ride, such as a carousel or vertical lift, or the like.

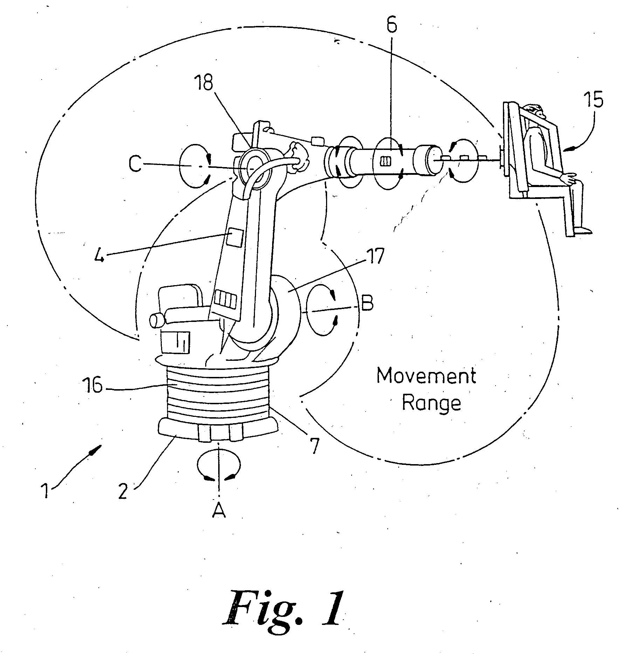

Figure 1 shows an amusement ride 1 comprising a base portion 2 supported on the ground and a trunnion 7 mounted on the base portion 2 to give rotation about a substantially vertical axis A. The trunnion 7 is in operative engagement with a first elongate member 4, said elongate member being adapted to move about a substantially horizontal axis B, said elongate member being in operative engagement with a second elongate member 6 adapted to move about a substantially horizontal axis C parallel to axis B. The second elongate member has a further 3 degrees of movement about the axis of said second elongate member 6 and a passenger station 15 in moveable engagement with said member. The amusement ride movements about said axes are controlled by motors 16, 17 and 18.

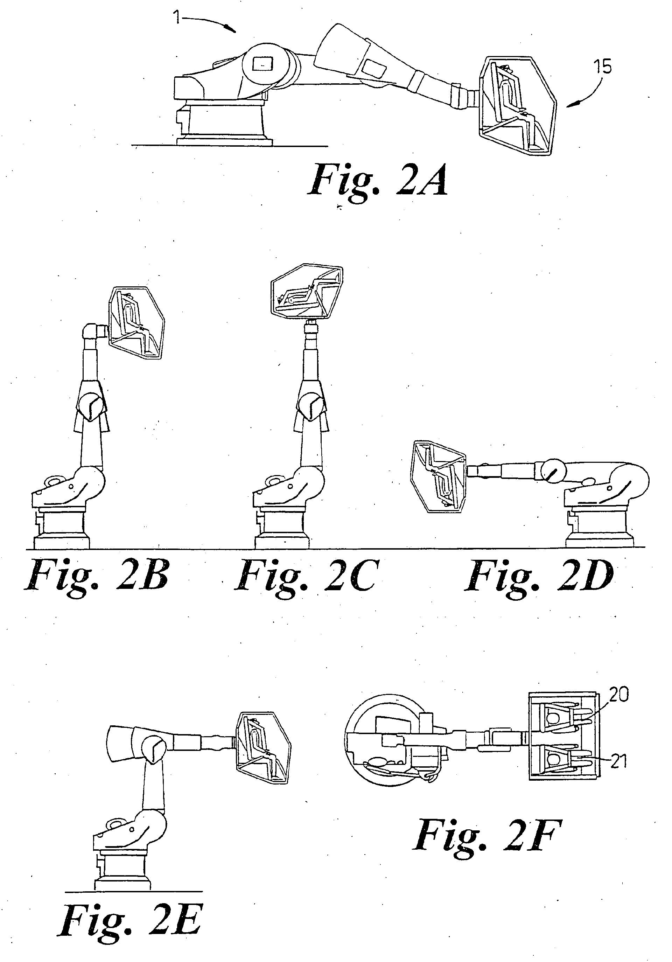

Figures 2A to 2F illustrate the various conditions that the amusement ride 1 of Figure 1 may assume during a ride. The passenger station 15 is shown having two seats, 20 and 21.

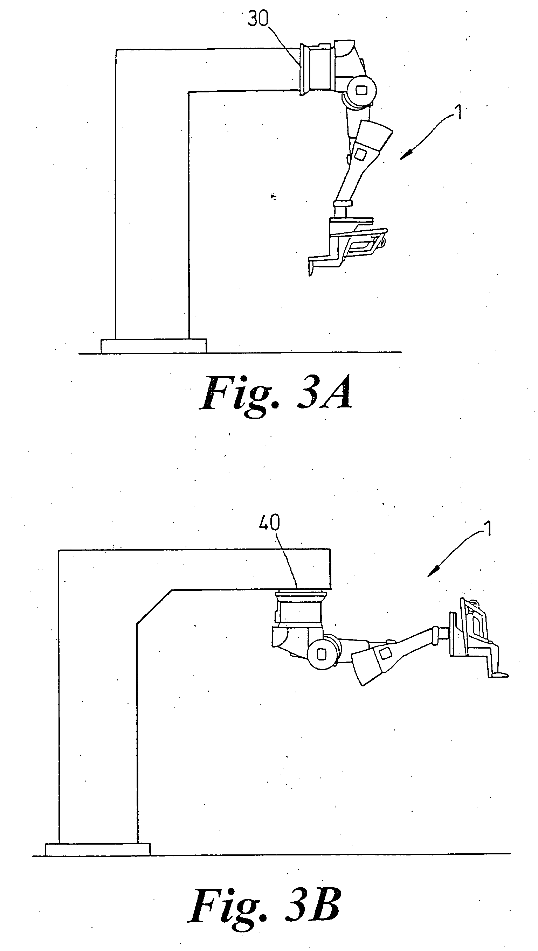

Referring to Figures 3A and 3B, alternative mountings of the amusement ride are illustrated. The ride 1 may be supported from a wall 30 or a ceiling 40. The passenger station may also be configured so that arms and legs of a passenger are unsupported.

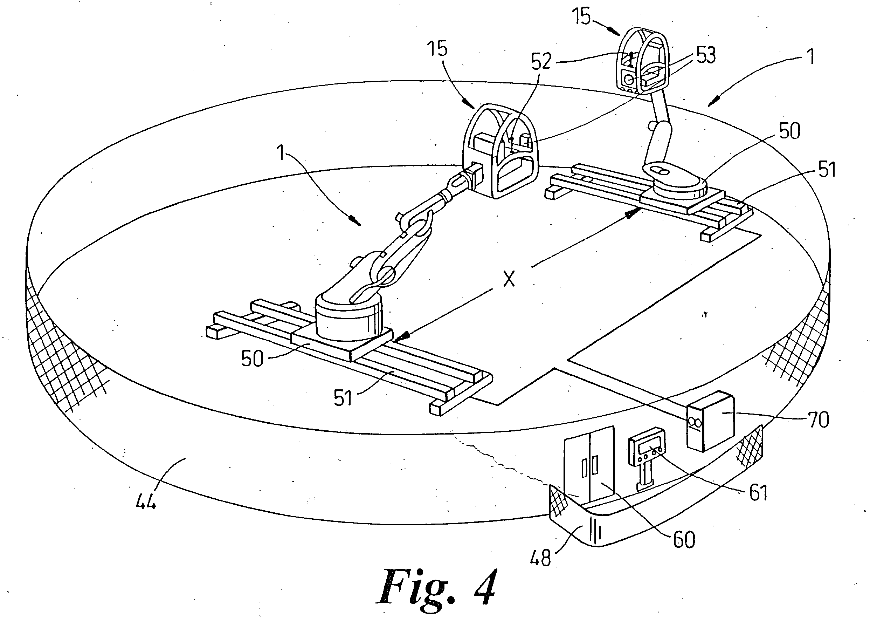

Figure 4 shows two amusement rides 1 in use in a combat game. The two rides are diametrically opposed to each other at a predetermined distance X. Said rides are each mounted on a fixed base or (as shown) on a base 50 in sliding engagement with a rail track 51, the bases and the tracks being parallel with each other. The passenger stations 15 are provided with a controller 52 and with optical (e.g. infra-red, photoelectric or laser) emitter and receiver assemblies 53, enabling the said passenger stations 15 to interact with each other. In a splash park, the optical emitter and receiver assemblies may be substituted with one or more water cannons.

The ride is enclosed by a reticulated fence 44 having a closure 60 (for ingress and egress of passengers) and a ticket machine 61 located adjacent the closure 60, for passengers to buy tickets for said ride.

The combat game is controlled by a computer 70. The computer 70 is integrated with the ticket machine 61 and with the two rides.

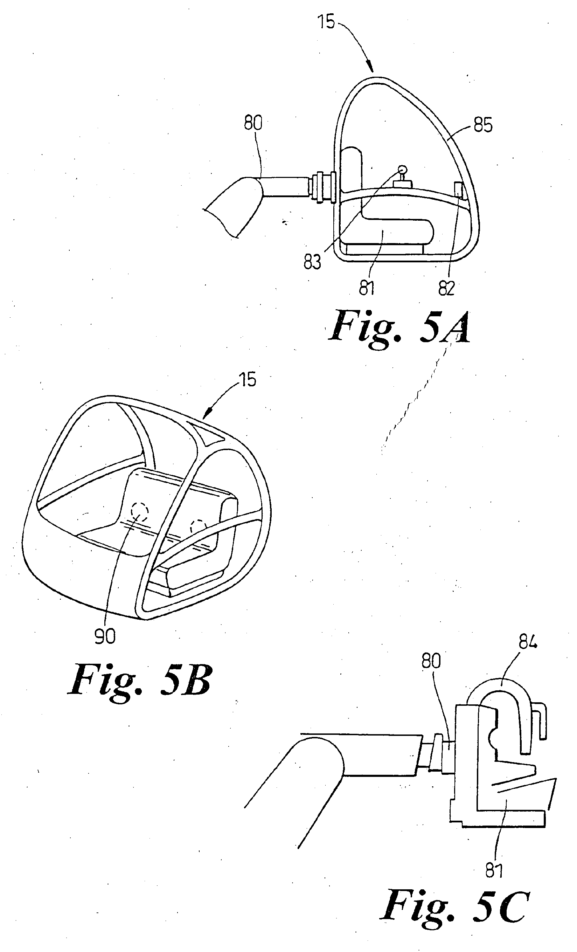

Figures 5A and 5B show the passenger station 15. The passenger station 15 is in movable engagement with the output member 80 of the ride. The passenger station 15 comprises a seat 81 with a weight sensor 90 located in the seat 81, a joystick controller 83 and a display means 82.

Figure 5C shows a passenger station 15 fitted with a pull down safety harness 84. The seat 81 is not contained in a capsule 85 (see Figure 5A).

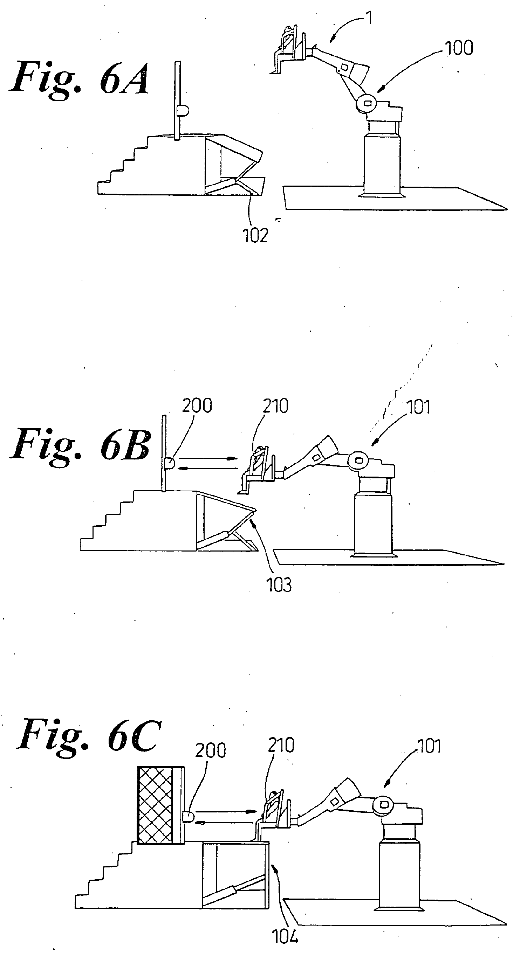

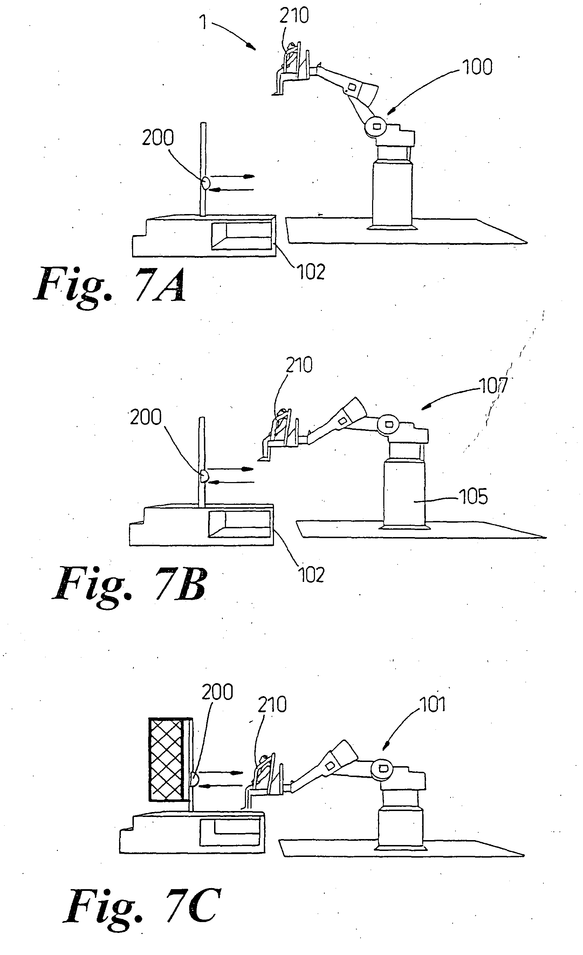

Figures 6A to 6C illustrate an alighting procedure for the ride. The ride 1 is shown in a first operative condition 100, attained at the beginning or end of a ride. The robot then lowers to a second operative condition 101, where an optical emitter 200 and receiver 210 assembly, one of said emitter and receiver being located on the ride, ensure that the ride is in the correct alighting position. One or more optical emitter and receiver assemblies may be used to monitor the alighting procedure. One or more optical emitter and receiver assemblies may be used to monitor a ride throughout a ride sequence. Concomitantly a platform 102, activated by hydraulics, is raised from a first operative condition 103 to a second operative condition 104 under the ride 1 (which is in a second operative condition 101). The passengers may then leave/enter the ride. Alternatively, the platform 102 is fixed and the ride is located on a vertically moving pedestal 105 as shown in Figures 7A to 7C. The ride is in a first operative condition 100, attained at the beginning or at the end of a ride. The ride then lowers to an intermediate operative condition 107. The pedestal 105 is lowered to a second operative condition 101 bringing the passenger into contact with the fixed platform 102. Again, the aforementioned optical emitter and receiver-assemblies may be used to monitor the alighting procedure. The passengers may then enter or leave the ride 1.

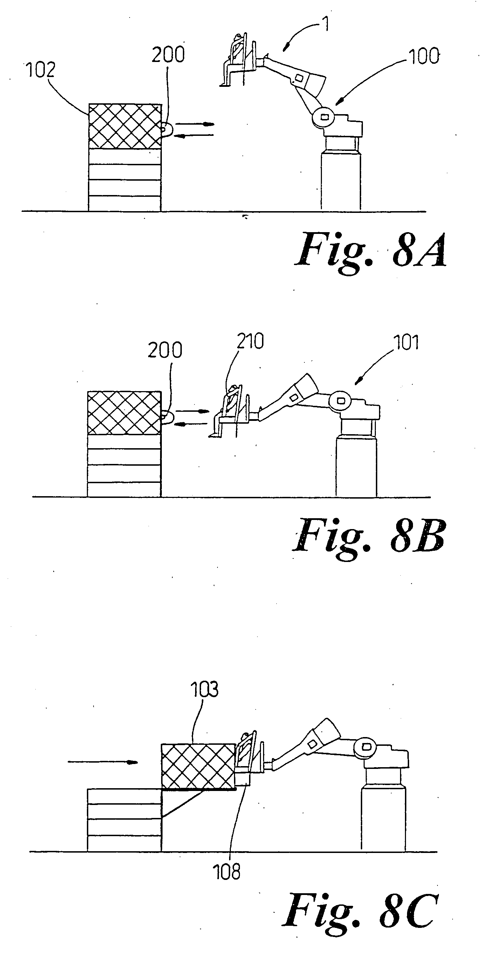

In a further alternative shown in Figures 8A to 8C the ride 1 is in a first operative condition 100, attained at the beginning or at the end of a ride. The robot then lowers to a second operative condition 101, where an optical emitter 200 and receiver 210 assembly, one of said emitter and receiver being located on said ride, to ensure that the ride is in the correct alighting position. One or more optical emitter and receiver assemblies may be used to monitor the alighting procedure. Concomitantly a platform 102 activated by hydraulics is extended from a first retracted condition 103 to a second operative condition 104 to engage with the ride 108. The engagement of the platform with the ride may facilitate part of a safety check for the above alighting procedure.

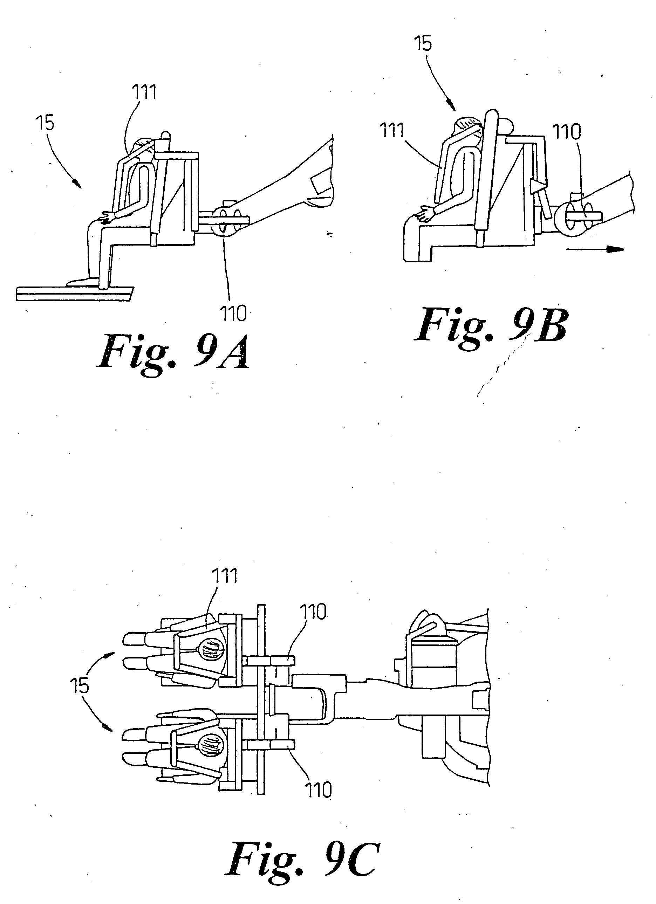

Upon leaving the ride the retaining means (e.g. a safety belt or cage) must be released. Figures 9A to 9C illustrate the use of shot bolt actuators 110 in releasing the retaining means. The shot bolt actuators can only be activated when the ride is in the aforementioned second operative condition 101. The shot bolt actuators 110 when activated release the retaining means 111, permitting the ingress and egress of passengers.

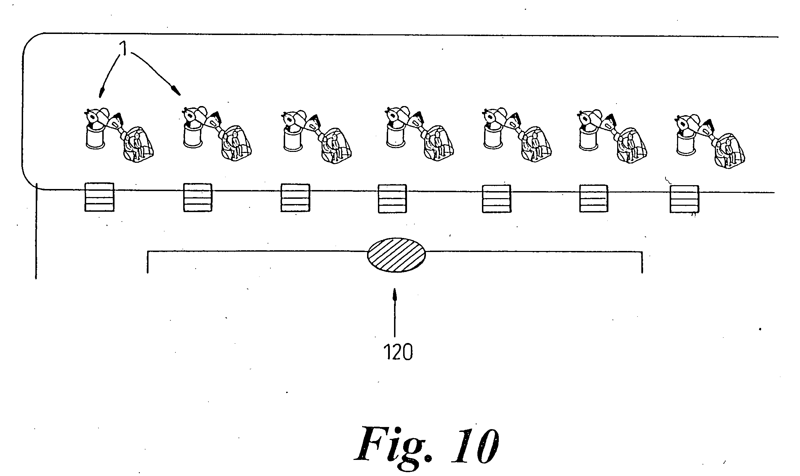

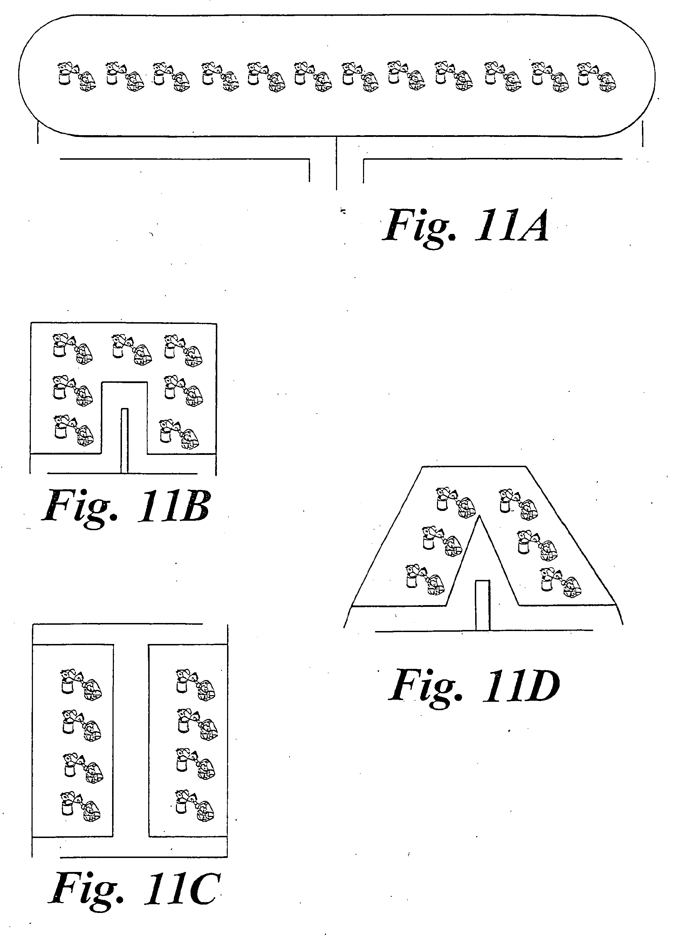

One or more amusement rides 1 of the present invention may be linked by a computer so as to move synchronously. The rides are controlled by a supervisor and control station 120, as illustrated in Figure 10. The amusement rides can also be programmed to move asynchronously to one another. The rides may also be assembled in various combinations as illustrated in Figures 11A to 11D.

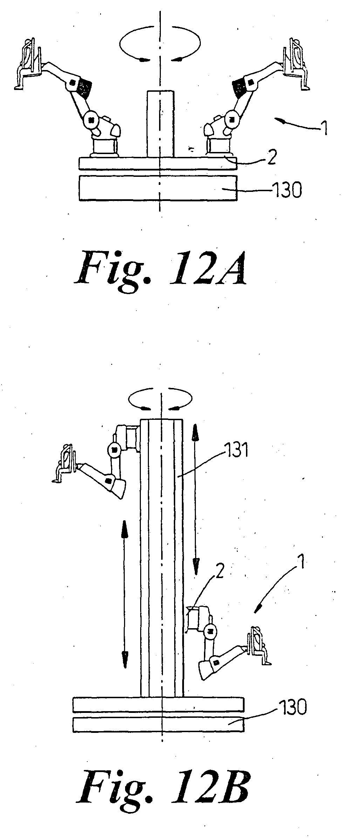

The base 2 of the amusement ride 1 of the present invention can be supported on a carousel 130, as illustrated in Figure 12A. One or more of said rides can be mounted onto the carousel. The carousel 130 may alternatively have an elongate centrally located column 131, from which one or more of said rides 1 may be supported, as illustrated in Figure 12B. The rides can then also rotate and move in a vertical plane simultaneously.

## Claims

1. An amusement ride comprising:
an output member having an anthropomorphic robot arm adapted for six degrees of movement; and
a passenger station in movable engagement with said output member,
**characterized by** computer controlled safety means.

2. An amusement ride as claimed in claim 1, in which the safety means comprise at least one of electro-mechanically, hydraulically or pneumatically operated actuators, or a combination thereof.

3. An amusement ride as claimed in claim 1 or 2, in which the safety means limit a G-force generated by said ride.

4. An amusement ride as claimed in any one of claims 1 to 3, in which the passenger station comprises one or more seats.

5. An amusement ride as claimed in claim 4, in which the passenger station seats include a retaining means.

6. An amusement ride as claimed in claim 5, in which the retaining means is in operative engagement with a linear actuator.

7. An amusement ride as claimed in any one of the preceding claims, in which said ride further comprises a weight sensor.

8. An amusement ride as claimed in claim 7, in which the weight sensor acts, in use, to counter out of balance loads.

9. An amusement ride as claimed in any one of the preceding claims, in which said ride further comprises a controller.

10. An amusement ride as claimed in claim 9, in which the controller is used to select a pre-programmed ride.

11. An amusement ride as claimed in claim 9, in which the controller is used to control said amusement ride independently of the pre-programmed ride.

12. An amusement ride as claimed in any one of claims 1 to 11, in which a platform is retracted into a stowage box and, in use, said platform is extended to engage with the ride.

13. An amusement ride as claimed in claim 12, in which the platform further comprises a safety barrier.

14. An amusement ride as claimed in any one of the preceding claims, comprising more than one of said rides.

15. An amusement ride as claimed in claim 14, in which two or more rides are programmed to move synchronously.

16. An amusement ride as claimed in claim 14, in which two or more rides are programmed to move asynchronously.

17. An amusement ride as claimed in any one of the preceding claims, in which the ride is fitted with optical emitter and receiver assemblies to monitor an alighting procedure.

18. An amusement ride as claimed in claim 17, in which the ride is fitted with optical emitter and receiver assemblies to monitor said ride throughout a ride sequence.

19. An amusement ride as claimed in claim 17 or 18, which the optical emitter and receiver assemblies are selected from the group consisting of infra-red, photoelectric and laser emitter and receiver assemblies.

20. An amusement ride as claimed in any one of claims 1 to 19, in which two or more rides are used in a combat game.
